Europäisches Patentamt

European Patent Office

Office européen des brevets

(19)

(11) Publication number: **0 477 860 A1**

# EUROPEAN PATENT APPLICATION

(12)

(21) Application number: **91116238.6**

(22) Date of filing: **24.09.91**

(51) Int. Cl.⁵: **F16B 19/10**, F16B 37/00

(30) Priority: **24.09.90 US 587305**

(43) Date of publication of application:
**01.04.92 Bulletin 92/14**

(84) Designated Contracting States:
**AT BE DE ES FR GB IT NL**

(71) Applicant: **SPS TECHNOLOGIES, Inc.**
**Newtown-Yardley Road**
**Newtown Pennsylvania 18940(US)**

(72) Inventor: **Hutchinson, Scott A.**
**22 Woodview Lane**
**North Wales, PA 19454(US)**

(74) Representative: **Patentanwälte Grünecker,**
**Kinkeldey, Stockmair & Partner**
**Maximilianstrasse 58**
**W-8000 München 22(DE)**

(54) **Improved blind fastener with drive nut.**

(57) This invention relates to a fastener (10) of a type having a core pin (11) including a threaded shank portion (15), an enlarged head (16) at one end thereof, and a torque tool engaging means (17) on the opposite side of the core pin from the head. The fastener (10) further has an expander means (12) including the head (19) with at least one recess (20) in the outer surface at one end thereof and a tapered nose portion (22) at the other end thereof. The expander means (12) has a bore (24) therethrough to receive the threaded shank portion (15) of the core pin (11). Also, the fastener (10) has sleeve means (13) on the core pin (11) between the nose portion (22) of the expander means (12) and the enlarged head (16) of the core pin (11). An internally threaded drive nut (14) is threadedly mounted on the core pin (11). The drive nut (14) has a bearing surface (27) facing towards the outer surface (21) of the head (19) of the expander means (12). The improvement in the fastener (10) in accordance with this invention comprises the drive nut's bearing surface (27) having at least one projecting portion (28) adapted to engage in the recess (20) in the outer surface (21) of the head (19) of the expander means (12) without deformation of the projecting portion (28). The number of projecting portions (28) can be equal to or less than the number of recesses (20).

FIG. 1

EP 0 477 860 A1

BACKGROUND OF THE INVENTION

1. Field of the Invention

This invention generally relates to blind fasteners and, more particularly, to blind fasteners with drive nuts for use in joining workpieces together.

2. Description of the Prior Art

Blind fasteners are used in many applications in which access to the blind side bearing surface of the workpieces being joined together is limited or completely inaccessible. Blind fasteners are particularly useful in aerospace applications, which present stringent requirements since not only must the fasteners securely fasten the workpieces, but they must also maintain their joint clamp load under the stresses and vibrations imposed upon the assembly.

One type of blind fastener known in the art has an internally threaded expander type body for insertion into aligned holes of workpieces, and an externally threaded core pin adapted for threaded engagement through the expander body. The inserted end of the core pin has an enlarged head and the outer end of the core pin has a torque tool engaging portion. Turning of the core pin relative to the fastener body causes the pin to move in an axial outward direction through the expander body. This axial outward movement causes a sleeve carried on the core pin to butt against the core pin's enlarged head and to deform around the expander body to a fully set condition against the workpiece. The core pin may have a breakneck groove adapted to shear the pin at a predetermined torque.

A drive nut threaded on the outer portion of the core pin may also be utilized with the blind fastener. During installation, the drive nut is in abutting contact with the expander body head so that the installation tool can grip the drive nut to hold the nut and expander body against rotation. However, slippage of the drive nut on the expander body head may occur during rotation of the core pin when setting the fastener. Furthermore, with the relatively smooth surfaces of the drive nut and the expander body head abutting, they tend to overtighten and jam together. As a result, relative turning slippage between the drive nut and expander body head in a tightening direction is accommodated by elastic extension of the core pin in the region gripped between the drive nut and the expander body. This extension tends to develop a tensile load in the core pin, which is relieved when the core pin fractures at the breakneck groove resulting in a corresponding loss of clamp load in the joint.

Examples of prior art blind fasteners with drive nuts include U.S. Patent No. 4,772,167, Beals, which discloses a blind fastener having a fastener body, a threaded stem and a sleeve provided with a deformable drive nut in abutting contact with the fastener body to provide a positive mechanical engagement between the abutting surfaces of the two elements. The underside of the drive nut has an annular ridge made of a deformable material adapted to deform into indentations in the outer surface of the fastener body. Also, U.S. Patent No. 4,877,363, Williamson et al, discloses a blind fastener that has an internally threaded sleeve with a head at one end and an extended taper at the other. A mandrel is threaded into and through the sleeve, and has a head that bears against a collar which it pushes onto the tapered end of the sleeve. A nut is threaded onto the mandrel to be turned against the head of the sleeve. In turn, the nut is restrained against rotation by a torque tool, and the mandrel is engaged by the tool to turn them counter rotatively to set the fastener. The nut has a bearing face that is intended to bear against the end surface of the sleeve. In one embodiment, a counterbore is formed, with an internal groove that forms a relatively thin circumferential lip. When this lip is brought strongly against the end surface of the sleeve, the lip deforms so that there is at least some entry of the lip into the recesses. In other embodiments, scallops or fingers are formed on the nut's bearing face. These scallops and fingers are proportioned to encourage permanent deformation and inter-engagement of the nut in the sleeve.

However, the prior art blind fasteners with drive nuts suffer from one or more deficiencies, such as overtightening and jamming contact between the drive nut and expander body, as well as the buildup of tensile load in the core pin which will ultimately result in loss of clamp load in the joint. The improved blind fastener with a drive nut in accordance with the present invention overcomes the deficiencies of the prior art.

SUMMARY OF THE INVENTION

This invention relates to a fastener of the type having a core pin including a threaded shank portion, an enlarged head at one end thereof, and a torque tool engaging means on the opposite side of the core pin from the head. The fastener further has an expander means including a head with at least one recess in the outer surface at one end thereof and a tapered nose portion at the other end thereof. The expander means has a bore therethrough adapted to receive the threaded shank portion of the core pin. Also, the fastener has sleeve means on the core pin between the nose portion of the expander means and the enlarged head of the core pin. An internally threaded drive nut is threadedly mounted on the core pin. The drive nut has a bearing surface facing towards the outer surface of the head of the expander means. The improvement in the fastener in accordance with this invention comprises the drive nut's bearing surface having at least one projecting portion adapted to engage in the recess in the outer surface of the head of the expander means without deformation of the projecting portion. Advantageously, there is no jamming contact between the bearing surface and the outer surface of the head of the expander means after engagement of the projecting portion in the recess in the outer surface. The number of projecting portions can be equal to or less than the number of recesses.

The present invention prevents rotation of the expander means relative to the drive nut. The present invention also prevents the buildup of tensile load in a region of the core pin between the drive nut and expander means upon engagement of the projecting portions in the recesses and prevents the loss of clamp load after the core pin fractures at the breakneck groove. This invention further provides a blind fastener assembly that should be easy to install, reliable and relatively inexpensive to manufacture.

Accordingly, it is an object of the present invention to provide an improved blind fastener with a drive nut. It is a further object of the present invention to provide a blind fastener where there is no jamming contact between the drive nut's bearing surface and the outer surface of the expander means. It is also an object of the present invention to provide an improved blind fastener with a drive nut having a bearing surface with projecting portions adapted to engage in recesses in the outer surface of the expander means' head without permanent deformation of the projecting portion so as to prevent rotation of the expander means relative to the drive nut. It is an additional object of the present invention to provide an improved blind fastener with a drive nut capable of preventing the buildup of tensile load in a region of the core pin between the drive nut and the expander means upon engagement of the projecting portions in the recesses. Furthermore, it is an object of the present invention to provide an improved blind fastener with a drive nut capable of minimizing the loss of clamp load after the core pin fractures at the breakneck groove.

These and many other objects, features and advantages of the present invention will become apparent to those skilled in the art when the following description of the preferred embodiments is read in conjunction with the drawings appended hereto.

BRIEF DESCRIPTION OF THE DRAWINGS

In the drawings, where like reference numerals refer to like elements throughout:

FIG. 1 is a partly cutaway side elevational view of a blind fastener assembly with a drive nut in accordance with the present invention.

FIG. 2 is one embodiment of an expander in accordance with the present invention.

FIG. 3 is one embodiment of a drive nut in accordance with the present invention.

FIG. 4 is a top plan view of one embodiment of a drive nut in accordance with the present invention.

FIG. 5 is a side elevational view of one embodiment of a drive nut in accordance with the present invention.

FIG. 6 is a top plan view of another embodiment of a drive nut in accordance with the present invention.

FIG. 7 is a side elevational view of another embodiment of a drive nut in accordance with the present invention.

FIG. 8 is a joint load diagram showing the relationship between joint clamp load on the vertical axis and time on the horizontal axis during installation in workpieces for blind fastener assemblies using drive nuts in accordance with present invention and blind fastener assemblies using prior art drive nuts.

DESCRIPTION OF THE PREFERRED EMBODIMENTS

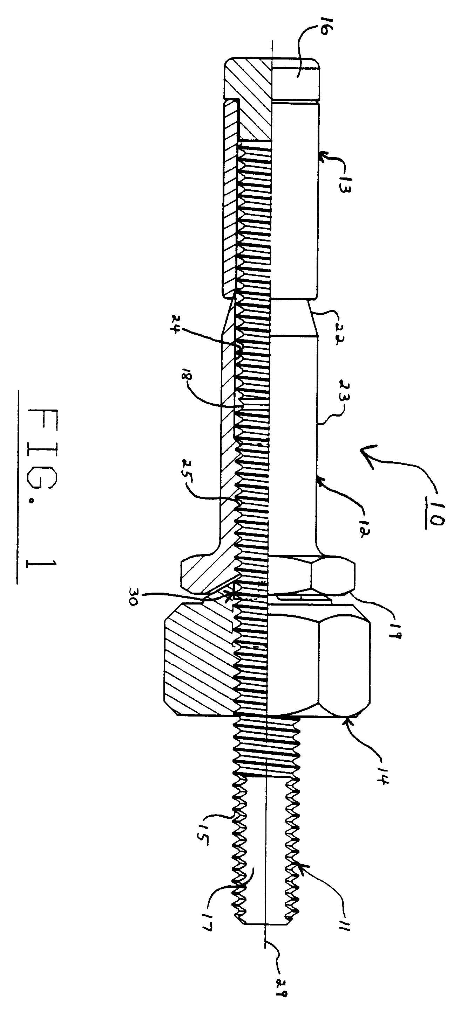

Referring now to the drawings, FIG. 1 illustrates a blind fastener assembly 10 in an assembled condition prior to installation. The blind fastener assembly 10 is of the type adapted to be installed in a workpiece having a first and a second surface with an opening therebetween or panels having aligned holes (not illustrated). Except for the novel features of the invention disclosed herein, the assembly 10 can generally be the type of blind fastener assembly disclosed in the above-mentioned U.S. Patent Nos. 4,772,167 and 4,877,363. Also, the assembly 10 can be of type disclosed in U.S. Patent No. 4,832,548 when adapted for use with a drive nut. The disclosures of these three patents are incorporated by reference herein, particularly for their showing of the assembly, and its installation and use.

The blind fastener assembly 10 has a core pin 11, expander means 12, sleeve means 13, and a drive nut 14. The core pin 11 includes an externally threaded shank portion 15 formed to pass through the opening in the workpiece or aligned holes in the panels. The core pin 11 also has an enlarged head 16 at one end thereof and a torque tool engaging means 17 formed on the shank of the core pin 11 on the opposite end of the pin 11 from the enlarged head 16. The torque tool engaging means 17 can be wrenching flats or other appropriate configuration adapted for engagement by a torque tool. A breakneck groove 18 or localized weakened region may be provided at an axial location along the core pin 11. The pin 11 is adapted to shear at groove 18 at a point near the head 19 of the expander 12 after the fastener is fully set.

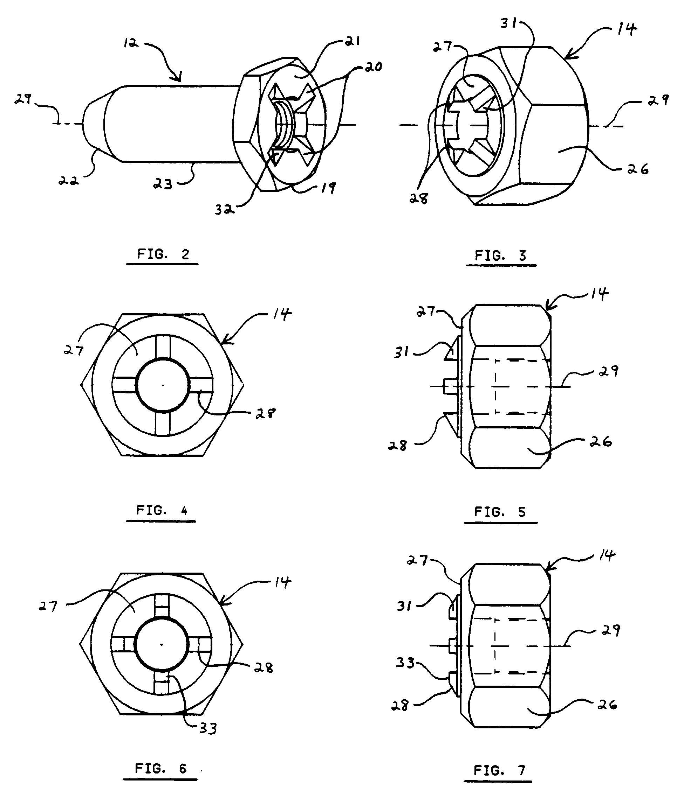

The expander 12 includes the head 19 with recesses 20 in an outer surface 21 at one end thereof, as illustrated in FIG. 2. The expander's head 19 is formed to bear against the first surface of the workpiece. The expander 12 also has a tapered nose portion 22 disposed at the other end thereof, opposite from the head 19. Between the head 19 and nose portion 22, the expander 12 is provided with a shank portion 23 having a cylindrical surface which is about the same outer diameter as the main portion of the sleeve 13, as illustrated in FIG. 1. The expander 12 further has a bore 24 therethrough and an internally threaded portion 25 engageable with the externally threaded shank portion 15 of the core pin 11. Thus, the expander 12 is adapted to receive the pin's shank portion 15, and to fit into and extend through the opening in the workpiece so that the nose portion 22 extends beyond the second surface of the workpiece upon installment.

The sleeve 13 is carried on the core pin's shank portion 15 between the expander's nose portion 22 and the end or head 16 of the core pin 11 which passes through the opening in the workpiece. The sleeve 13 is adapted to expand over the expander's tapered nose portion 22. During installation of the blind fastener assembly 10, appropriate rotation of the core pin 11 with respect to the expander 12 draws the pin's enlarged head 16 toward the workpiece and also draws the sleeve 13 toward the expander 12. Continued advancement of the core pin 11 causes the expander's nose portion 22 to force the sleeve 13 to expand over the nose portion 22 until the assembly is fully set. A washer may also be utilized in the assembly as described in the above-mentioned U.S. Patent No. 4,832,548.

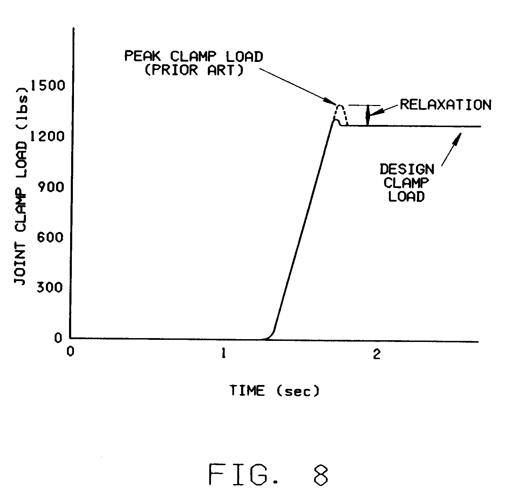

An internally threaded drive nut 14 is threadedly mounted on the core pin 11. As shown in FIG. 3, the drive nut 14 has wrenching surfaces 26 for engagement by a torque tool (not illustrated). The drive nut 14 also has a bearing surface 27 facing towards the outer surface 21 of the expander's head 19. In accordance with the present invention, the bearing surface 27 has one or more tabs 28 adapted to engage in the recesses 20 in the outer surface 21 of the expander 12 without permanent deformation of the tabs 28. This engagement of the tabs 28 in the recesses 20 serves to prevent rotation of the expander 12 relative to the drive nut 14. The tabs 28 are arranged on the bearing surface 21 so that they engage with the recesses 20. The number of tabs 28 is equal to or less than the number of recesses 20 to achieve engagement. Preferably, the number of tabs 28 equals the number of recesses 20 and they are both aligned for engagement of each tab in a recess upon assembly. For example, in a preferred embodiment illustrated in FIGS. 2-5, the drive nut 14 has four tabs 28 arranged 90° apart in relation to the longitudinal axis 29, and the expander 12 has four recesses 20 also arranged 90° apart in relation to the longitudinal axis 29. Advantageously, the tabs 28 are rigid. In another embodiment illustrated in FIGS. 6 and 7, the tabs 28 are truncated 33 so as to minimize the possibility of any deformation occurring during assembly.

Significantly, unlike the prior art fasteners described in the above-cited U.S. Patent Nos. 4,772,167 and 4,877,363, permanent deformation of any part of the present invention's bearing surface 27 is not necessary to achieve satisfactory engagement between the drive nut 14 and expander 12. Rather, the tabs 28 in accordance with the present invention are of sufficient rigidity so as not to permanently deform upon engagement with the recesses 20, as illustrated in FIG 1. Furthermore, the tabs 28 are made of material to provide sufficient strength to prevent rotation of the expander 12 relative to the drive nut 14 after the tabs 28 are engaged in the recesses 20.

In use, the blind fastener assembly 10 of this invention is inserted through the opening in the workpiece or aligned holes in the panels until the expander 12 bears against the first surface of the workpiece or outer surface of the outer panel. A torque tool is applied to grip the drive nut and hold it against rotation, while applying torque to the outer region of the core pin 11 having the torque tool engaging means 17 to turn the pin 11 in one direction until the sleeve 13 or a washer has been expanded laterally to a fully set condition in contact with the second surface of the workpiece or inner surface of the inner panel. Furthermore, the drive nut's tabs 28 engage in the expander's recesses 20. If desired, the drive nut's tabs 28 can be pre-engaged in the expander's recesses 20 before installation of the blind fastener assembly 10 in the workpiece.

More particularly, with reference to the embodiment illustrated in FIGS. 2-5, positive mechanical engagement occurs between the sides 31 of the tabs 28 and the sides 32 of the recesses 20, thereby preventing relative rotation between the expander 12 and the drive nut 14 when the core pin 11 is rotated clockwise relative to the drive nut 14 during installation. Moreover, contact between the remainder of the drive nut's bearing surface 27 and the expander's outer surface 21 is minimized and these surfaces do not need to bear against each other. Accordingly, there is no jamming contact between the drive nut's bearing surface 27 and the outer surface 21 of the expander's head 19. The term "no jamming contact" as used herein means that no friction between the drive nut's bearing surface 27 and the expander's outer surface 21 is necessary to prevent rotation of the expander 12 relative to the drive nut 14. In addition to preventing jamming contact, the tabs 28 are adapted to engage in the recesses 20 so as to prevent the buildup of tensile load in a region 30 of the core pin 11 between the drive nut 14 and the expander 12 (as shown in FIG. 1) upon engagement of the tabs 28 in the recesses 20. Thus, the core pin 11 is not subjected to unacceptable tensile loads that would ultimately result in the corresponding loss of clamp load in the joint.

Comparative tests were conducted to determine the amount of clamp load loss present immediately after the core pin fractures at the breakneck groove, completing installation of assemblies using both SPS Technologies' drive nuts having bearing surfaces in accordance with the present invention and prior art drive nuts having deformable bearing surfaces as described in U.S. Patent No. 4,772,167. Seven tests were conducted for each type of drive nut using a blind fastener assembly having a corebolt, an expander and a sleeve as illustrated in FIG. 1 with a -6-250 grip using the designated type of drive nut. Seven tests were conducted using the SPS drive nut made of 1137 cold rolled steel and seven tests were conducted using the prior art drive nut made of 1137 cold rolled steel. Separate drive nuts were used for each test run. The final clamp load and clamp load loss were measured for each test run immediately after the core pin fractures at the breakneck groove completing installation of the assemblies. The results are reported in Table I below.

### TABLE I

| | SPS DRIVE NUT | | PRIOR ART DRIVE NUT | |
|---|---|---|---|---|
| | FINAL CLAMP LOAD LBS | CLAMP LOAD LOSS LBS | FINAL CLAMP LOAD LBS | CLAMP LOAD LOSS LBS |
| Test | | | Test | |
| 1 | 1040 | 25 | 1 1360 | 200 |
| 2 | 1295 | 25 | 2 1460 | 120 |
| 3 | 1335 | 35 | 3 1470 | 110 |
| 4 | 1155 | 35 | 4 1410 | 90 |
| 5 | 1510 | 35 | 5 1440 | 180 |
| 6 | 1600 | 70 | 6 1645 | 120 |
| 7 | 1190 | 30 | 7 1360 | 120 |
| | ----- | ----- | ----- | ------ |
| AVG.: | 1304 | 36 | 1449 | 134 |

The results reported in Table I indicate the exceptionally lower clamp load loss produced by the blind fastener assembly in accordance with the present invention as compared to the prior art assembly. The clamp load loss is dependent on the amount of tensile load buildup in the region of the core pin between the drive nut and the expander. During the final stage of the blind fastener installation after the design clamp load has been applied to the workpieces, the breakgroove or localized weakened region of the corebolt shears. Any tensile load being carried by the drive nut is then transferred to the expander, causing a relaxation in preload. Therefore, in order to achieve the desired design clamp load, the prior art assemblies must put undesirable stresses on the workpieces to overcome the loss of clamp load that will occur at final installation, as illustrated in FIG. 8. As can be appreciated by those skilled in the art, the present invention reduces the buildup of tensile load in the region of the core pin between the drive nut and the expander to nearly zero.

While this invention has been described with respect to particular embodiments thereof, it is apparent that numerous other forms and modifications of this invention will be obvious to those skilled in the art. The appended claims and this invention generally should be construed to cover all such obvious forms and modifications which are within the true spirit and scope of the present invention.

**Claims**

1. In a fastener of the type having: a core pin including a threaded shank portion, an enlarged head at one end thereof, and a torque tool engaging means on the opposite side of the core pin from the head; expander means including a head with at least one recess in an outer surface at one end thereof and a tapered nose portion at the other end thereof, said expander means having a bore therethrough adapted to receive the threaded shank portion of the core pin; sleeve means on said core pin between said nose portion of the expander means and the enlarged head of the core pin; an internally threaded drive nut threadedly mounted on said core pin, said drive nut having a bearing surface facing towards said outer surface of the head of the expander means; the improvement comprising:

   said bearing surface having at least one projecting portion adapted to engage in said recess in the outer surface of the head of the expander means without deformation of said projecting portion.

2. The fastener according to Claim 1 wherein there is no jamming contact between said bearing surface and said outer surface of the head of the expander means after engagement of said projecting portion in said recess in the outer surface.

3. The fastener according to Claim 1 wherein the number of projecting portions is equal to or less than the number of recesses.

4. The fastener according to Claim 1 wherein the number of projecting portions equals the number of recesses.

5. The fastener according to Claim 1 wherein said bearing surface has four projecting portions.

6. The fastener according to Claim 1 wherein said projecting portion is a rigid tab.

7. In a fastener of the type having: a core pin including a threaded shank portion, an enlarged head at one end thereof, and a torque tool engaging means on the opposite end of the core pin from the head; expander means including a head with recesses in an outer surface at one end thereof and a tapered nose portion at the other end thereof, said expander means having a bore therethrough adapted to receive the threaded shank portion of the core pin; sleeve means on said core pin between said nose portion of the expander means and the enlarged head of the core pin; an internally threaded drive nut threadedly mounted on said core pin, said drive nut having a bearing surface facing towards said outer surface of the head of the expander means; the improvement comprising:

   said bearing surface having tabs adapted to engage in said recesses in the outer surface of the head of the expander means without permanent deformation of the tabs so as to prevent rotation of the expander means relative to the drive nut.

8. The fastener according to Claim 7 wherein there is no jamming contact between said bearing surface and said outer surface of the head of the expander means after engagement of said tabs in said recesses in the outer surface.

9. The fastener according to Claim 7 wherein said tabs are adapted to engage in said recesses so as to prevent the buildup of tensile load in a region of the core pin between the drive nut and the expander means upon engagement of the tabs in the recesses.

10. The fastener according to Claim 7 wherein the number of tabs is equal to or less than the number of recesses.

11. The fastener according to Claim 7 wherein the number of tabs equals the number of recesses.

12. The fastener according to Claim 7 wherein said bearing surface has four tabs.

13. The fastener according to Claim 7 wherein said tabs are rigid tabs.

14. The fastener according to Claim 13 wherein said rigid tabs are truncated tabs.

15. In a blind fastener assembly of the type adapted to be installed in a workpiece having a first and a second surface with an opening therebetween, said blind fastener having: a core pin including a threaded shank portion formed to pass through the opening in the workpiece, an enlarged head at one end thereof, and a torque tool engaging means on the opposite end of the core pin from the head; expander means including a head with recesses in an outer surface at one end thereof, said head formed to bear against the first surface of the workpiece, a tapered nose portion at the other end thereof, and a shank portion therebetween, said expander means having a bore therethrough adapted to receive the threaded shank portion of the core pin and adapted to fit into and extend through the opening in the workpiece wherein said nose portion extends beyond the second surface of the workpiece; sleeve means carried on said core pin shank portion between said nose portion of the expander means and the end of the core pin which passes through the opening in the workpiece, said sleeve means adapted to expand over said expander means tapered nose portion; an internally threaded drive nut threadedly mounted on said core pin, said drive nut having a bearing surface facing towards said outer surface of the head of the expander means; the improvement comprising:

said bearing surface having rigid tabs adapted to engage in said recesses in the outer surface of the head of the expander means without permanent deformation of the tabs so as to prevent rotation of the expander means relative to the drive nut and to prevent the buildup of tensile load in a region of the core pin between the drive nut and the expander means upon engagement of the tabs in the recesses.

16. The fastener assembly according to Claim 15 wherein there is no jamming contact between said bearing surface and said outer surface of the head of the expander means after engagement of said tabs in said recesses in the outer surface.

17. The fastener assembly according to Claim 15 wherein the number of tabs is equal to or less than the number of recesses.

18. The fastener assembly according to Claim 15 wherein the number of tabs equals the number of recesses.

19. The fastener assembly according to Claim 15 wherein said bearing surface has four tabs and said outer surface of the head of the expander means has four recesses.

20. The fastener assembly according to Claim 15 wherein said rigid tabs are truncated tabs.

FIG. 1

FIG. 2

FIG. 3

FIG. 4

FIG. 5

FIG. 6

FIG. 7

FIG. 8

EUROPEAN SEARCH REPORT

European Patent
Office

Application Number

EP    91 11 6238

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-4 877 363 (WILLIAMSON ET AL.)<br><br>* column 3, line 30 - line 53; figures 1,4-7 * | 1-4,6-8, 10,11, 13,15-18 | F16B19/10<br>F16B37/00 |
| D,A | US-A-4 772 167 (BEALS)<br><br>* column 1, line 51 - column 2, line 56 *<br>* column 5, line 19 - line 34; figures 1-6 * | 1,2,7-9, 15,16 | |
| A | FR-A-1 574 014 (OTALU)<br><br>* page 3, line 29 - page 4, line 13; figures 1,2 * | 1-8, 10-13, 15-19 | |

TECHNICAL FIELDS
SEARCHED (Int. Cl.5 )

F16B

The present search report has been drawn up for all claims

| Place of search | Date of completion of the search | Examiner |
|---|---|---|
| THE HAGUE | 09 DECEMBER 1991 | CALAMIDA G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)